# EUROPEAN PATENT APPLICATION

(11) **EP 3 951 484 A1**
(43) Date of publication of application: **09.02.2022**
(21) Application number: 20782097.8
(22) Date of filing: 27.03.2020
(51) Int. Cl.: G02C 7/10, G02B 5/23, G02C 7/02

(54) **SPECTACLE LENS AND EYEGLASSES**

(30) Priority: 29.03.2019 JP 2019067818
(71) Applicant: Hoya Lens Thailand Ltd., Pathumthani 12130 (TH)
(72) Inventor: SHIMADA Takuya, Tokyo 160-8347 (JP); YAMASHITA Teruo, Tokyo 160-8347 (JP)
(74) Representative: Hoffmann Eitle
(86) International application number: PCT/JP2020/014265
(87) International publication number: WO 2020/203866

(57) **Abstract**

Provided is a spectacle lens including a lens substrate and a photochromic layer, wherein the photochromic layer is a cured layer of a curable composition containing a photochromic compound and a plurality of curable compounds, a surface Martens hardness of the photochromic layer is 5.0 kgf/mm² or more, and the plurality of curable compounds contain components (1) to (3) below:
(1) neopentyl glycol di(meth)acrylate;
(2) a curable compound having an L-scale Rockwell hardness of homopolymer of 60 or more; and
(3) a curable compound having an L-scale Rockwell hardness of homopolymer of 40 or less.

## Description

### Technical Field

The present invention relates to a spectacle lens and spectacles.

### Background Art

A photochromic compound is a compound having a property (photochromic properties) of developing color under irradiation with light in a wavelength range having photoresponsiveness and fading under non irradiation. Examples of a method for imparting photochromic properties to a spectacle lens include a method of providing a coating containing a photochromic compound and a curable compound on a lens substrate and then curing this coating to form a cured layer (photochromic layer) having photochromic properties (see, for example, Patent Literature 1).

### Citation List

### Patent Literature

Patent Literature 1: WO 2003/011967

### Summary of Invention

### Technical Problem

The properties desired for the spectacle lens having photochromic properties as described above include a high response speed to light (excellent photoresponsiveness). Meanwhile, regarding the photoresponsiveness of the photochromic layer, softening the photochromic layer is said to be advantageous for improving the photoresponsiveness. However, from the viewpoint of the durability of the photochromic layer and the spectacle lens including this layer, a hard photochromic layer is desirable.

According to an aspect of the present invention, there is provided a spectacle lens having a photochromic layer having high hardness and excellent photoresponsiveness.

### Solution to Problem

An aspect of the present invention relates to a spectacle lens including:
a lens substrate; and a photochromic layer, wherein
the photochromic layer is a cured layer of a curable composition containing a photochromic compound and a plurality of curable compounds,
a surface Martens hardness of the photochromic layer is 5.0 kgf/mm² or more, and
the plurality of curable compounds contain components (1) to (3) below:
   (1) neopentyl glycol di(meth)acrylate;
   (2) a curable compound having an L-scale Rockwell hardness of homopolymer of 60 or more; and
   (3) a curable compound having an L-scale Rockwell hardness of homopolymer of 40 or less.

The photochromic layer included in the spectacle lens contains the components (1) to (3) as a curable compound. When neopentyl glycol di(meth)acrylate (component (1)) is added to the curable composition containing the components (2) and (3) together with the photochromic compound, a photochromic layer having high hardness and excellent photoresponsiveness can be formed.

### Advantageous Effects of Invention

According to an aspect of the present invention, there is provided a spectacle lens including a photochromic layer having high hardness and excellent photoresponsiveness.

### Description of Embodiments

### [Spectacle Lens]

A spectacle lens according to an aspect of the present invention will be described below.

### <Surface Martens hardness of photochromic layer>

The surface Martens hardness of the photochromic layer included in the spectacle lens is 5.0 kgf/mm² or more. It is desirable that the photochromic layer has a surface Martens hardness of 5.0 kgf/mm² or more from the viewpoint of the durability of the photochromic layer and the spectacle lens including this layer. The surface Martens hardness is preferably 5.5 kgf/mm² or more, and more preferably 6.0 kgf/mm² or more. In addition, the surface Martens hardness can be, for example, 12.0 kgf/mm² or less, 11.0 kgf/mm² or less, or 10.0 kgf/mm² or less. Since a large value of the surface Martens hardness is desirable from the viewpoint of improving durability, the surface Martens hardness may exceed the value exemplified above. The surface Martens hardness is a value measured by a method shown in Examples described later under an environment at an atmospheric temperature of 30°C.

### <Curable composition>

Next, a curable composition used for forming the photochromic layer will be described. The curable composition contains the following components (1) to (3) together with the photochromic compound:
(1) neopentyl glycol di(meth)acrylate;
(2) a curable compound having an L-scale Rockwell hardness of homopolymer of 60 or more; and
(3) a curable compound having an L-scale Rockwell hardness of homopolymer of 40 or less.

### (Component (1))

The component (1) is neopentyl glycol di(meth)acrylate. Inclusion of neopentyl glycol di(meth)acrylate together with the components (2) and (3) in the curable composition is considered to be the reason why the photochromic layer formed from this composition can exhibit excellent photoresponsiveness while having a surface Martens hardness of 5.0 kgf/mm² or more. In the present invention and the present specification, the "(meth)acrylate" is used to mean encompassing acrylate and methacrylate. The "acrylate" is a compound having one or more acryloyl groups in one molecule. The "methacrylate" is a compound having one or more methacryloyl groups in one molecule. In the present invention and the present specification, the "methacrylate" refers to those containing only a methacryloyl group as a (meth)acryloyl group, and those containing both an acryloyl group and a methacryloyl group as a (meth)acryloyl group are referred to as acrylate. The acryloyl group may be contained in the form of an acryloyloxy group, and the methacryloyl group may be contained in the form of a methacryloyloxy group. The neopentyl glycol di(meth)acrylate may be an acrylate or a methacrylate. From the viewpoint of further improving the photoresponsiveness of the photochromic layer, the content of the neopentyl glycol di(meth)acrylate is preferably 5 mass% or more, more preferably 7 mass% or more, further preferably 10 mass% or more, still more preferably 12 mass% or more, and still even more preferably 15 mass% or more relative to the total amount (100 mass%) of the components (1) to (3) contained in the curable composition. It is preferable to increase the proportion of the neopentyl glycol di(meth)acrylate in the components (1) to (3) contained in the curable composition from the viewpoint of improving the photoresponsiveness of the photochromic layer. From the viewpoint of the brittleness of the photochromic layer, the proportion is preferably 50 mass% or less, more preferably 45 mass% or less, further preferably 40 mass% or less, still more preferably 35 mass% or less, still even more preferably 30 mass% or less, even more preferably 25 mass% or less, still even more preferably 20 mass% or less relative to the total amount of the components (1) to (3) contained in the curable composition.

### (Component (2))

The component (2) is a curable compound having an L-scale Rockwell hardness of homopolymer of 60 or more (hereinafter, also referred to as "high hardness monomer").

The L-scale Rockwell hardness means a hardness measured according to JIS B7726:2017. Whether the hardness condition is satisfied can be easily determined by measuring the homopolymer of each curable compound. Specifically, the L-scale Rockwell hardness can be easily confirmed by polymerizing the curable compound to obtain a cured body having a thickness of 2 mm, holding the cured body in an environment at an atmospheric temperature of 25°C for 1 day, and then measuring the L-scale Rockwell hardness using a Rockwell hardness meter.

The polymer to be subjected to the measurement of the L-scale Rockwell hardness is obtained by cast polymerization under the condition where 90% or more of the curable functional groups of the charged curable compound are polymerized. The L-scale Rockwell hardness of the cured body polymerized under such a condition is measured as a substantially constant value.

The high hardness monomer used as the component (2) is preferably a radical polymerizable monomer having an L-scale Rockwell hardness of homopolymer of 65 to 130.

Such a high hardness monomer is usually a compound having 2 to 15, preferably 2 to 6 radical polymerizable groups. Preferred specific examples thereof include compounds represented by the following general formulae (1) to (5).

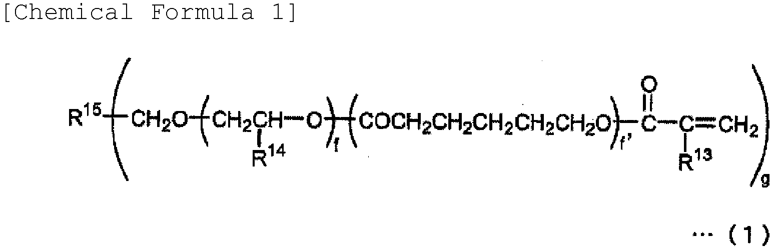

In the formula, R¹³ is a hydrogen atom or a methyl group, R¹⁴ is a hydrogen atom, a methyl group, or an ethyl group, R¹⁵ is a trivalent to hexavalent organic group, f is an integer in a range of 0 to 3, f' is an integer in a range of 0 to 3, and g is an integer in a range of 3 to 6.

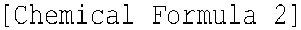

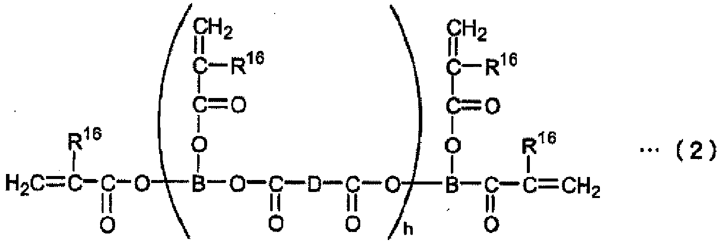

In the formula, R¹⁶ is a hydrogen atom or a methyl group, B is a trivalent organic group, D is a divalent organic group, and h is an integer in a range of 1 to 10.

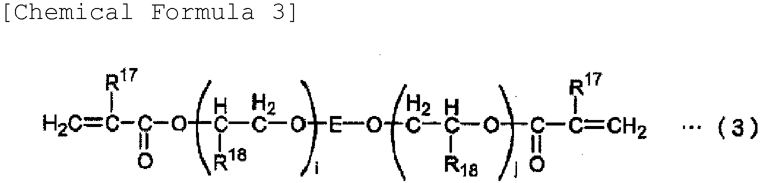

In the formula, R¹⁷ is a hydrogen atom or a methyl group, R¹⁸ is a hydrogen atom, a methyl group, an ethyl group, or a hydroxyl group, E is a divalent organic group containing a cyclic group, i and j are positive integers, and the average value of i + j is 0 to 6.

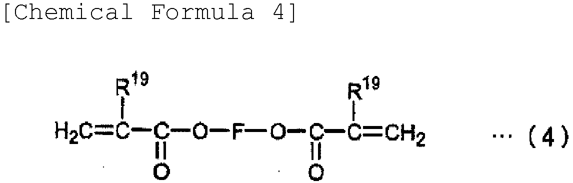

In the formula, R¹⁹ is a hydrogen atom or a methyl group, and F is an alkylene group having 2 to 9 carbon atoms in the main chain and optionally having a side chain.

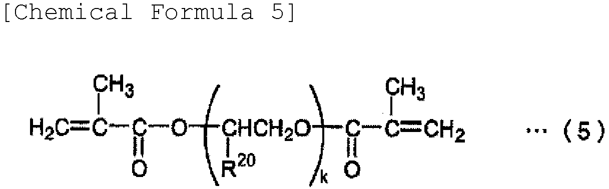

In the formula, R²⁰ is a hydrogen atom, a methyl group, or an ethyl group, and k is an integer in a range of 1 to 6.

Since R¹³ to R¹⁹ in the general formulae (1) to (4) are each a hydrogen atom or a methyl group, the compounds represented by the general formulae (1) to (4) are compounds having 2 to 6 (meth)acryloyloxy groups.

R¹⁴ in the general formula (1) is a hydrogen atom, a methyl group, or an ethyl group.

R¹⁵ in the general formula (1) is a trivalent to hexavalent organic group. This organic group is not particularly limited, and may contain, in its main chain, a bond other than a carbon-carbon bond, such as an ester bond, an ether bond, an amide bond, a thioether bond, a sulfonyl bond, or a urethane bond.

In order to set the L-scale Rockwell hardness of homopolymer to 60 or more, R¹⁵ is preferably an organic group having 1 to 30 carbon atoms, and more preferably an organic group having 1 to 15 carbon atoms and optionally containing an ether bond and/or a urethane bond.

Also, f and f' are each independently an integer in a range of 0 to 3. In order to set the L-scale Rockwell hardness to 60 or more, the total of f and f' is preferably 0 to 3.

Specific examples of the high hardness monomer represented by the general formula (1) include trimethylolpropane trimethacrylate, trimethylolpropane triacrylate, tetramethylolmethane trimethacrylate, tetramethylolmethane triacrylate, trimethylolpropane trimethacrylate, tetramethylolmethane tetramethacrylate, tetramethylolmethane tetraacrylate, trimethylolpropane triethylene glycol trimethacrylate, trimethylolpropane triethylene glycol triacrylate, ethoxylated pentaerythritol tetraacrylate, ethoxylated pentaerythritol tetramethacrylate, pentaerythritol trimethacrylate, pentaerythritol tetramethacrylate, dipentaerythritol hexaacrylate, urethane oligomer tetraacrylate, urethane oligomer hexamethacrylate, urethane oligomer hexaacrylate, polyester oligomer hexaacrylate, caprolactone-modified dipentaerythritol hexaacrylate, and ditrimethylolpropane tetraacrylate.

In the general formula (2), B is a trivalent organic group, and D is a divalent organic group. B and D are not particularly limited, and may contain, in their main chain, a bond other than a carbon-carbon bond, such as an ester bond, an ether bond, an amide bond, a thioether bond, a sulfonyl bond, or a urethane bond. In order to set the L-scale Rockwell hardness of homopolymer to 60 or more, B is preferably an organic group derived from a linear or branched hydrocarbon having 3 to 10 carbon atoms, and D is an organic group derived from a linear or branched aliphatic hydrocarbon having 1 to 10 carbon atoms or an aromatic hydrocarbon having 6 to 10 carbon atoms.

In order to set the L-scale Rockwell hardness of homopolymer to 60 or more, h is an integer in a range of 1 to 10, and preferably an integer in a range of 1 to 6.

Specific examples of the high hardness monomer represented by the general formula (2) include tetrafunctional polyester oligomers having a molecular weight of 2,500 to 3,500 (Daicel-UCB Co., Ltd., EB80, etc.), tetrafunctional polyester oligomers having a molecular weight of 6,000 to 8,000 (Daicel-UCB Co., Ltd., EB450, etc.), hexafunctional polyester oligomers having a molecular weight of 45,000 to 55,000 (Daicel-UCB Co., Ltd., EB1830, etc.), and tetrafunctional polyester oligomers having a molecular weight of 10,000 (DKS Co., Ltd., GX8488B, etc.).

R¹⁸ in the general formula (3) is a hydrogen atom, a methyl group, an ethyl group, or a hydroxyl group. E in the formula (3) is a divalent organic group containing a cyclic group. This organic group is not particularly limited as long as it contains a cyclic group, and may contain, in its main chain, a bond other than a carbon-carbon bond, such as an ester bond, an ether bond, an amide bond, a thioether bond, a sulfonyl bond, or a urethane bond. Examples of the cyclic group contained in E include a benzene ring, a cyclohexane ring, an adamantane ring, and cyclic groups shown below.

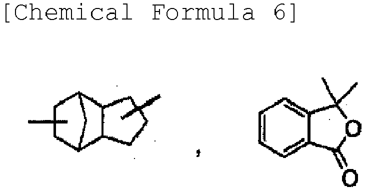

The cyclic group contained in E is preferably a benzene ring. E is more preferably a group represented by the following formula: 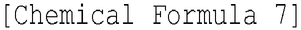 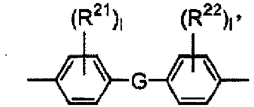 wherein G is any group selected from an oxygen atom, a sulfur atom, -S(O₂)-, -C(O)-, -CH₂-, -CH=CH-, -C(CH₃)₂-, and -C(CH₃) (C₆H₅)-, R²¹ and R²² are each independently an alkyl group having 1 to 4 carbon atoms or a halogen atom, and 1 and l' are each independently an integer in a range of 0 to 4. E is most preferably a group represented by the following formula.

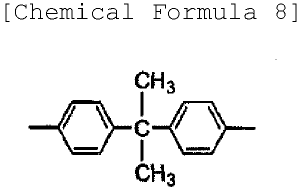

In the general formula (3), i and j are positive integers, and the average value of i + j is 0 to 6. Note that the compound represented by the formula (3) is usually obtained as a mixture of a plurality of compounds having different i and j, except a case where both i and j are 0. Since isolation of these compounds is difficult, i and j are indicated by the average value of i + j. The average value of i + j is more preferably 2 to 6.

Specific examples of the high hardness monomer represented by the general formula (3) include bisphenol A dimethacrylate, 2,2-bis(4-methacryloyloxyethoxyphenyl)propane, and 2,2-bis(3,5-dibromo-4-methacryloyloxyethoxyphenyl) propane.

In the general formula (4), R¹⁹ is a hydrogen atom or a methyl group, and F is an alkylene group having 2 to 9 carbon atoms in the main chain and optionally having a side chain. Examples of the alkylene group having 2 to 9 carbon atoms in the main chain include an ethylene group, a propylene group, a trimethylene group, a butylene group, a neopentylene group, a hexylene group, and a nonylylene group.

Specific examples of the high hardness monomer represented by the general formula (4) include ethylene glycol diacrylate, ethylene glycol dimethacrylate, 1,4-butylene glycol dimethacrylate, 1,9-nonylene glycol dimethacrylate, neopentylene glycol dimethacrylate, and neopentylene glycol diacrylate.

In the general formula (5), R²⁰ is a hydrogen atom, a methyl group, or an ethyl group, k is an integer in a range of 2 to 6, and k is preferably 3 or 4.

Specific examples of the high hardness monomer represented by the general formula (5) include diethylene glycol dimethacrylate, triethylene glycol dimethacrylate, tetraethylene glycol dimethacrylate, tripropylene glycol dimethacrylate, and tetrapropylene glycol dimethacrylate.

Some of the compounds represented by the general formulae (1) to (5) have an L-scale Rockwell hardness of homopolymer of less than 60 depending on the combination of the substituents. In this case, these compounds are classified into the low hardness monomer or the medium hardness monomer described later.

In addition, there are also high hardness monomers not represented by the general formulae (1) to (5), and representative compounds thereof include bisphenol A diglycidyl methacrylate, ethylene glycol bisglycidyl methacrylate, and glycidyl methacrylate.

### (Component (3))

The component (3) is a curable compound having an L-scale Rockwell hardness of homopolymer of 40 or less (hereinafter, also referred to as "low hardness monomer"). Examples of the low hardness monomer used as the component (3) include a bifunctional curable compound represented by the following general formula (6): 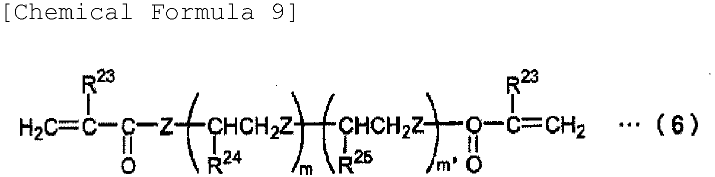 wherein R²³ is a hydrogen atom or a methyl group, R²⁴ and R²⁵ are each independently a hydrogen atom, a methyl group, or an ethyl group, Z is an oxygen atom or a sulfur atom, m is an integer of 1 to 70 when R²³ is a hydrogen atom or an integer of 7 to 70 when R²³ is a methyl group, and m' is an integer in a range of 0 to 70.

Examples of the low hardness monomer used as the component (3) also include a bifunctional curable compound represented by the following general formula (7): 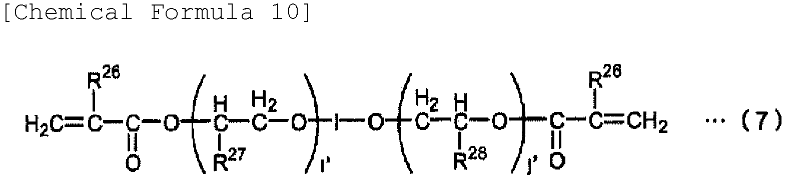 wherein R²⁶ is a hydrogen atom or a methyl group, R²⁷ and R²⁸ are each independently a hydrogen atom, a methyl group, an ethyl group, or a hydroxyl group, I is a divalent organic group containing a cyclic group, i' and j' are integers, and the average value of i' + j' is 8 to 40.

In addition, examples of the low hardness monomer used as the component (3) also include a monofunctional curable compound represented by the following general formula (8): 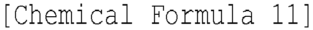 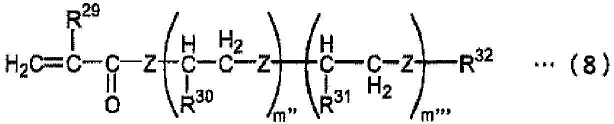 wherein R²⁹ is a hydrogen atom or a methyl group, R³⁰ and R³¹ are each independently a hydrogen atom, a methyl group, or an ethyl group, R³² is a hydrogen atom, an alkyl group, an alkenyl group, an alkoxyalkyl group, or a haloalkyl group having 1 to 25 carbon atoms, an aryl group having 6 to 25 carbon atoms, or an acyl group having 2 to 25 carbon atoms other than a (meth)acryloyl group, Z is an oxygen atom or a sulfur atom, m" is an integer of 1 to 70 when R²⁹ is a hydrogen atom or an integer of 4 to 70 when R²⁹ is a methyl group, and m‴ is an integer in a range of 0 to 70.

Examples of the low hardness monomer used as the component (3) also include a monofunctional curable compound represented by the following general formula (9): 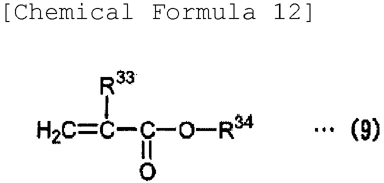 wherein R³³ is a hydrogen atom or a methyl group, R³⁴ is an alkyl group having 1 to 20 carbon atoms when R³³ is a hydrogen atom, or an alkyl group having 8 to 40 carbon atoms when R³³ is a methyl group.

In the general formulae (6) to (9), R²³, R²⁶, R²⁹, and R³³ are a hydrogen atom or a methyl group. That is, the low hardness monomer usually has two or less (meth)acryloyloxy groups or (meth)acryloylthio groups as a polymerizable group.

_{R}²⁴ and R²⁵ in the general formula (6) are each independently a hydrogen atom, a methyl group, or an ethyl group, and Z is an oxygen atom or a sulfur atom.

In the general formula (6), when R²³ is a hydrogen atom, that is, R²³ has an acryloyloxy group or an acryloylthio group as a polymerizable group, m is an integer of 1 to 70, whereas when R²³ is a methyl group, that is, R²³ has a methacryloyloxy group or a methacryloylthio group as a polymerizable group, m is an integer of 7 to 70. Also, m' is an integer in a range of 0 to 70.

Specific examples of the low hardness monomer represented by the general formula (6) include alkylene glycol di(meth)acrylates such as trialkylene glycol diacrylate, tetraalkylene glycol diacrylate, nonylalkylene glycol diacrylate, and nonylalkylene glycol dimethacrylate.

R²⁶ in the general formula (7) is a hydrogen atom, a methyl group, or an ethyl group.

I is a divalent organic group containing a cyclic group. This I is the same as that exemplified as E, which is a cyclic group included in the general formula (9). i' and j' in the general formula (7) are integers, and the average value of i' + j' is 8 to 40, preferably 9 to 30. These i' and j' are also usually represented as the average value as i and j in the above formula (3) for the same reason.

Specific examples of the low hardness monomer represented by the general formula (7) include 2,2-bis(4-acryloyloxypolyethylene glycol phenyl)propane having an average molecular weight of 776.

In the general formula (8), R²⁹ is a hydrogen atom or a methyl group, and R³⁰ and R³¹ are each independently a hydrogen atom, a methyl group, or an ethyl group. R³² is a hydrogen atom, an alkyl group, an alkenyl group, an alkoxyalkyl group, or a haloalkyl group having 1 to 25 carbon atoms, an aryl group having 6 to 25 carbon atoms, or an acyl group having 2 to 25 carbon atoms other than an acryloyl group.

Examples of the alkyl group or alkenyl group having 1 to 25 carbon atoms include a methyl group, an ethyl group, a propyl group, and a nonyl group. In addition, these alkyl groups or alkenyl groups may be linear or branched, and may be further substituted with a substituent such as a halogen atom, a hydroxyl group, an aryl group, or an epoxy group.

Examples of the alkoxyalkyl group having 1 to 25 carbon atoms include a methoxybutyl group, an ethoxybutyl group, a butoxybutyl group, and a methoxynonyl group.

Examples of the aryl group having 6 to 25 carbon atoms include a phenyl group, a toluyl group, an anthranil group, and an octylphenyl group. Examples of the acyl group other than a (meth)acryloyl group include an acetyl group, a propionyl group, a butyryl group, a valeryl group, and an oleyl group.

In the general formula (8), when R²⁹ is a hydrogen atom, that is, R²⁹ has an acryloyloxy group or an acryloylthio group as a polymerizable group, m" is an integer in a range of 1 to 70, and when R²⁹ is a methyl group, that is, R²⁹ has a methacryloyloxy group or a methacryloylthio group as a polymerizable group, m" is an integer in a range of 4 to 70, and m‴ is an integer in a range of 0 to 70.

Specific examples of the low hardness monomer represented by the general formula (8) include polyalkylene glycol (meth)acrylates such as polyethylene glycol (meth)acrylate having an average molecular weight of 526, polyethylene glycol (meth)acrylate having an average molecular weight of 360, methyl ether polyethylene glycol (meth)acrylate having an average molecular weight of 475, methyl ether polyethylene glycol (meth)acrylate having an average molecular weight of 1,000, polypropylene glycol (meth)acrylate having an average molecular weight of 375, polypropylene (meth)acrylate having an average molecular weight of 430, polypropylene (meth)acrylate having an average molecular weight of 622, methyl ether polypropylene glycol (meth)acrylate having an average molecular weight of 620, polytetramethylene glycol (meth)acrylate having an average molecular weight of 566, octyl phenyl ether polyethylene glycol methacrylate having an average molecular weight of 2,034, nonyl ether polyethylene glycol methacrylate having an average molecular weight of 610, methyl ether polyethylene thioglycol methacrylate having an average molecular weight of 640, and perfluoroheptyl ethylene glycol methacrylate having an average molecular weight of 498. A preferable range of the average molecular weight of the low hardness monomer represented by the general formula (8) is 200 to 2,500, and more preferably 300 to 700. The average molecular weight in the present invention is a weight average molecular weight.

In the general formula (9), R³³ is a hydrogen atom or a methyl group, and when R³³ is a hydrogen atom, R³⁴ is an alkyl group having 1 to 20 carbon atoms, and when R³³ is a methyl group, R³⁴ is an alkyl group having 8 to 40 carbon atoms. These alkyl groups may be linear or branched, and may be substituted with a substituent such as a halogen atom, a hydroxyl group, an alkoxyl group, an acyl group, or an epoxy group.

Specific examples of the low hardness monomer represented by the general formula (9) include stearyl methacrylate, lauryl (meth)acrylate, ethylhexyl methacrylate, methyl acrylate, ethyl acrylate, butyl acrylate, and lauryl acrylate.

Among these low hardness monomers represented by the general formulae (6) to (9), methyl ether polyethylene glycol (meth)acrylate having an average molecular weight of 475, methyl ether polyethylene glycol (meth)acrylate having an average molecular weight of 1,000, trialkylene glycol diacrylate, tetraalkylene glycol diacrylate, nonylalkylene glycol diacrylate, methyl acrylate, ethyl acrylate, butyl acrylate, and lauryl acrylate are particularly preferable.

Some of the compounds represented by the general formulae (6) to (9) also have an L-scale Rockwell hardness of homopolymer of more than 40 depending on the combination of substituents. In this case, these compounds are classified into the high hardness monomer described above or the medium hardness monomer described later.

A monomer that is neither the high hardness monomer nor the low hardness monomer, that is, a monomer having an L-scale Rockwell hardness of more than 40 and less than 60 in a single cured body (hereinafter, also referred to as "medium hardness monomer") can also be used. Examples of the medium hardness monomer include bifunctional (meth)acrylates such as polytetramethylene glycol di(meth)acrylate having an average molecular weight of 650, polytetramethylene glycol di(meth)acrylate having an average molecular weight of 1,400, and bis(2-methacryloyloxyethylthioethyl)sulfide; polyvalent allyl compounds such as diallyl phthalate, diallyl isophthalate, diallyl tartrate, diallyl epoxy succinate, diallyl fumarate, diallyl chlorendate, diallyl hexaphthalate, and allyl diglycol carbonate; polyvalent thioacrylic acid and polyvalent thiomethacrylic acid ester compounds such as 1,2-bis(methacryloylthio)ethane, bis(2-acryloylthioethyl)ether, and 1,4-bis(methacryloylthiomethyl)benzene; unsaturated carboxylic acids such as acrylic acid, methacrylic acid, and maleic anhydride; acrylic acid and methacrylic acid ester compounds such as methyl methacrylate, butyl methacrylate, benzyl methacrylate, phenyl methacrylate, 2-hydroxyethyl methacrylate, and biphenyl methacrylate; fumaric acid ester compounds such as diethyl fumarate and diphenyl fumarate; thioacrylic acid and thiomethacrylic acid ester compounds such as methylthioacrylate, benzylthioacrylate, and benzylthiomethacrylate; vinyl compounds such as styrene, chlorostyrene, methylstyrene, vinylnaphthalene, α-methylstyrene dimer, bromostyrene, divinylbenzene, and vinylpyrrolidone; and radical polymerizable monofunctional monomers such as (meth)acrylates having an unsaturated bond in the molecule and having a hydrocarbon chain having 6 to 25 carbon atoms, such as oleyl methacrylate, nerol methacrylate, geraniol methacrylate, linalool methacrylate, and farnesol methacrylate.

For the contents of the low hardness monomer and the high hardness monomer, the content of the low hardness monomer is preferably 5 to 70 mass%, and the content of the high hardness monomer is preferably 5 to 95 mass%, relative to the total (100 mass%) of the curable compounds contained in the curable composition.

### (Photochromic compound)

The composition contains a photochromic compound together with two or more (meth)acrylates. As the photochromic compound contained in the composition, a known compound exhibiting photochromic properties can be used. The photochromic compound can exhibit photochromic properties against, for example, ultraviolet rays. Examples of the photochromic compound include compounds having a known skeleton exhibiting photochromic properties, such as a fulgimide compound, a spirooxazine compound, a chromene compound, and an indeno-fused naphthopyran compound. The photochromic compound can be used singly or in combination of two or more thereof. The content of the photochromic compound of the composition can be, for example, approximately 0.1 to 15 mass% relative to 100 mass% of the total amount of the composition, but is not limited to this range.

### (Optional component)

The curable composition containing various components described above is cured when subjected to a curing treatment, whereby a cured layer can be formed. The curable composition can contain a polymerization initiator for initiating a curing reaction (also referred to as polymerization reaction). As the polymerization initiator, a known polymerization initiator such as a photopolymerization initiator or a thermal polymerization initiator can be used according to the type of the curing reaction. The amount of the polymerization initiator used may be determined according to the polymerization condition, the type of the polymerization initiator, and the type of the curable compound contained in the curable composition.

To the curable composition, known additives that can be added to the composition containing the photochromic compound, for example, additives such as a surfactant, an antioxidant, a radical scavenger, a photostabilizer, an ultraviolet absorber, a coloring inhibitor, an antistatic agent, a fluorescent dye, a dye, a pigment, a fragrance, a plasticizer, and a silane coupling agent can be further added in any amounts. As these additives, known compounds can be used.

The curable composition can be prepared by mixing the various components described above simultaneously or sequentially in any order. A spectacle lens produced by applying the curable composition to a lens substrate has a photochromic layer, and can exhibit photochromic properties.

### <Lens substrate>

The lens substrate included in the spectacle lens can be a plastic lens substrate or a glass lens substrate. The glass lens substrate can be, for example, a lens substrate made of inorganic glass. As the lens substrate, a plastic lens substrate is preferable from the viewpoint of being light, hardly broken, and easy to handle. Examples of the plastic lens substrate include a styrene resin including a (meth)acrylic resin, a polycarbonate resin, an allyl resin, an allyl carbonate resin such as diethyleneglycol bis(allylcarbonate) resin (CR-39), a vinyl resin, a polyester resin, a polyether resin, a urethane resin obtained through reaction between an isocyanate compound and a hydroxy compound such as diethylene glycol, a thiourethane resin obtained through reaction between an isocyanate compound and a polythiol compound, and a cured product (generally referred to as a transparent resin) obtained by curing a curable composition containing a (thio)epoxy compound having one or more intermolecular disulfide bonds. The lens substrate may be undyed (a colorless lens) or dyed (a dyed lens). The refractive index of the lens substrate can be, for example, approximately 1.60 to 1.75. Provided that the refractive index of the lens substrate is not limited to the above range, but may be within the above range or deviate therefrom. In the present invention and the present specification, the refractive index refers to a refractive index with respect to light having a wavelength of 500 nm. In addition, the lens substrate may be a lens having power (so-called prescription lens) or a lens having no power (so-called plain glass lens).

The spectacle lens can be various lenses such as a single-vision lens, a multifocal lens, and a progressive addition lens. The type of the lens is determined depending on the shapes of both surfaces of the lens substrate. Further, the surface of the lens substrate may be a convex surface, a concave surface, or a flat surface. In a common lens substrate and spectacle lens, the object-side surface is a convex surface, and the eyeball-side surface is a concave surface. However, the present invention is not limited thereto. The photochromic layer can be usually provided on the object-side surface of the lens substrate, but may be provided on the eyeball-side surface.

The photochromic layer formed using the curable composition may be directly provided on the surface of the lens substrate, or may be indirectly provided with one or more other layers interposed between the photochromic layer and the lens substrate. Examples of the other layer include a primer layer for improving adhesion between the photochromic layer and the lens substrate. Such a primer layer is known.

### <Photochromic layer>

The photochromic layer of the spectacle lens can be formed by applying the curable composition onto the surface of the lens substrate directly or indirectly with one or more other layers interposed between the photochromic layer and the lens substrate, and subjecting the applied curable composition to a curing treatment. As a coating method, a known coating method such as a spin coating method or a dip coating method can be employed. The spin coating method is preferable from the viewpoint of uniformity of coating. The curing treatment can be light irradiation and/or heat treatment. Light irradiation is preferable from the viewpoint of allowing the curing reaction to proceed in a short time. The curing treatment condition may be determined according to the types of various components (various curable compounds, polymerization initiator, and the like described above) contained in the curable composition and the constitution of the curable composition. The thickness of the photochromic layer thus formed is, for example, preferably in a range of 5 to 80 µm, and more preferably in a range of 20 to 60 µm.

The spectacle lens having the photochromic layer may or may not have one or more functional layers in addition to the photochromic layer. Examples of the functional layer include layers known as functional layers of a spectacle lens, such as a hard coat layer, an antireflective layer, a water-repellent or hydrophilic antifouling layer, and an antifogging layer.

### [Spectacles]

An aspect of the present invention relates to spectacles including the spectacle lens. Details of the spectacle lens included in the spectacles are as described above. The spectacle lens including such a spectacle lens can exhibit an anti-glare effect like sunglasses, provided by the photochromic compound contained in the photochromic layer developing color upon receiving sunlight irradiation in outdoors, for example, and can also recover transparency due to discoloration of the photochromic compound when returning to indoors. A known technique can be applied to the configuration of a frame or the like of the above spectacles.

### Examples

Hereinafter, the present invention will be further described based on examples. However, the present invention is not limited to aspects illustrated in the examples.

### [Examples 1 to 4 and Comparative Example 1]

### <Preparation of coating composition for optical article>

In a plastic container, 3 parts by mass of the following chromene 1 as a photochromic compound, 5 parts by mass of a photostabilizer (bis(1,2,2,6,6-pentamethyl-4-piperidyl)sebacate, methyl(1,2,2,6,6-pentamethyl-4-piperidyl)sebacate), 5 parts by mass of a hindered phenol-based antioxidant (bis[3-(3-tert-butyl-4-hydroxy-5-methylphenyl)propionate][ethylenebis(oxyethylene)]), and 0.6 parts by mass of phenylbis(2,4,6-trimethylbenzoyl)-phosphineoxide as an ultraviolet polymerization initiator were added to 100 parts by mass of a radical polymerizable monomer composed of 20 parts by mass of trimethylolpropane trimethacrylate (high hardness monomer), 35 parts by mass of a BPE oligomer (2,2-bis(4-methacryloyloxypolyethoxyphenyl)propane) (high hardness monomer), 10 parts by mass of EB6A (polyester oligomer hexaacrylate) (low hardness monomer), 10 parts by mass of polyethylene glycol diacrylate having an average molecular weight of 532 (low hardness monomer), and 10 parts by mass of glycidyl methacrylate (high hardness monomer), the mixture was sufficiently stirred, and then 6 parts by mass of a silane coupling agent (3-methacryloxypropyltrimethoxysilane) was added dropwise with stirring. Thereafter, the resultant was defoamed by an automatic planetary stirring defoaming device. Neopentyl glycol dimethacrylate (component (1)) was added to the composition thus prepared in an amount such that the content of the neopentyl glycol dimethacrylate relative to the total amount of the components (1) to (3) was the value shown in Table 2, to obtain a curable composition.

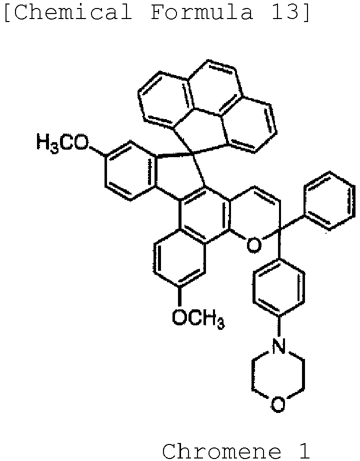

### <Production of spectacle lens>

A plastic lens substrate (product name EYAS, manufactured by HOYA Corporation; center thickness: 2.5 mm, radius: 75 mm, S: -4.00) was immersed in a 10 mass% aqueous sodium hydroxide solution (liquid temperature: 60°C) for 5 minutes, then washed with pure water, and dried. Thereafter, a primer layer was formed on the convex surface (object-side surface) of the plastic lens substrate. Specifically, an aqueous polyurethane resin liquid (polycarbonate polyol-based polyurethane emulsion; viscosity: 100 CPS, solid content concentration: 38 mass%) was applied to the convex surface of the plastic lens substrate by a spin coating method in an environment of a temperature of 25°C and a relative humidity of 50%, and then naturally dried for 15 minutes to form a primer layer having a thickness of 5.5 µm.

The composition prepared above was applied onto the primer layer by a spin coating method. The spin coating was performed by the method described in JP 2005-218994 A. Thereafter, the composition applied onto the plastic lens substrate was irradiated with ultraviolet rays (wavelength: 405 nm) in a nitrogen atmosphere (oxygen concentration: 500 ppm or less) to cure the composition, thereby forming a photochromic layer. The thickness of the formed photochromic layer was 45 µm.

For each of Examples and Comparative Examples, a plurality of spectacle lenses in which the degree of progress of the curing reaction of the photochromic layer was changed by changing the light irradiation time were produced. As the curing reaction proceeds, the hardness of the photochromic layer can be increased.

### [Evaluation method]

### <Photoresponsiveness (fading rate)>

The transmittance (measurement wavelength: 550 nm) of each spectacle lens produced above before light irradiation (undeveloped state) was measured by a spectrophotometer manufactured by Otsuka Electronics Co., Ltd. The transmittance measured here is referred to as "initial transmittance".

The surface of the photochromic layer of each spectacle lens was irradiated with light using a xenon lamp through an air mass filter for 15 minutes (900 seconds) to cause a photochromic compound in the photochromic layer to develop color. The transmittance at color development was measured in the same manner as described above. The light irradiation was performed so that the irradiance and tolerance of the irradiance were values shown in the following Table 1 as specified in JIS T7333:2005.

Thereafter, the time (half-life) required from the time when the light irradiation was stopped until the transmittance reached [(initial transmittance - transmittance at color development)/2] was measured. A smaller value of the half-life measured in this way is determined to exhibit high fading rate and excellent photoresponsiveness.

**[Table 1]**

| Wavelength range (nm) | Irradiance (W/m²) | Tolerance of irradiance (W/m²) |
|---|---|---|
| 300 to 340 | < 2.5 | - |
| 340 to 380 | 5.6 | ± 1.5 |
| 380 to 420 | 12 | ± 3.0 |
| 420 to 460 | 12 | ± 3.0 |
| 460 to 500 | 26 | ± 2.6 |

### <Surface Martens hardness of photochromic layer>

The surface Martens hardness of the photochromic layer of each spectacle lens after the evaluation was measured by the following method.

Using an ultra-micro indentation hardness tester ENT-2100, manufactured by ELIONIX INC., an indenter was pressed against the surface of the photochromic layer with a load of 100 kgf, and the surface area where the indenter penetrated at this time was measured from the indentation depth. The surface Martens hardness (kgf/mm²) was determined as "load/surface area where the indenter penetrated".

Table 2 (Table 2-1 and Table 2-2) shows the half-life value determined for each spectacle lens described above. The results shown in Table 2 demonstrate that the photoresponsiveness of a high hardness photochromic layer having a surface Martens hardness of 5.0 kgf/mm² or more can be improved by addition of the component (1). Table 2 shows the half-life for the cases where the surface Martens hardness is 5.0 kgf/mm² and 6.0 kgf/mm². It was confirmed for Examples 1 to 4 that photochromic layers exhibiting a surface Martens hardness of, for example, 8.0 kgf/mm², 10.0 kgf/mm², and 12.0 kgf/mm² could be formed by increasing the light irradiation time at the time of forming the photochromic layer, and addition of the component (1) shortened the half-life at any hardness as compared with the case of not adding the component (1). In Examples 3 and 4, generation of a few cracks was confirmed in the photochromic layer when the light irradiation time was increased, whereas in Examples 1 and 2, such a phenomenon was not confirmed. The result shows that Examples 1 and 2 are more preferable than Examples 3 and 4 from the viewpoint of the brittleness of the photochromic layer.

**[Table 2-1]**

| | Content of component (1) | Surface Martens hardness of photochromic layer (kgf/mm²) | Half-life |
|---|---|---|---|
| Comparative Example 1 | 0 mass% | 5.0 | 235 sec |
| Example 1 | 10 mass% | 5.0 | 170 sec |
| Example 2 | 20 mass% | 5.0 | 145 sec |
| Example 3 | 30 mass% | 5.0 | 135 sec |
| Example 4 | 40 mass% | 5.0 | 135 sec |

**[Table 2-2]**

| | Content of component (1) | Surface Martens hardness of photochromic layer (kgf/mm²) | Half-life |
|---|---|---|---|
| Comparative Example 1 | 0 mass% | 6.0 | 280 sec |
| Example 1 | 10 mass% | 6.0 | 205 sec |
| Example 2 | 20 mass% | 6.0 | 170 sec |
| Example 3 | 30 mass% | 6.0 | 150 sec |
| Example 4 | 40 mass% | 6.0 | 150 sec |

Finally, the above described aspects will be summarized.

According to an aspect, there is provided a spectacle lens including a lens substrate and a photochromic layer, wherein the photochromic layer is a cured layer of a curable composition containing a photochromic compound and a plurality of curable compounds, the surface Martens hardness of the photochromic layer is 5.0 kgf/mm² or more, and the plurality of curable compounds contain the above components (1) to (3).

The spectacle lens has a photochromic layer having high hardness and can exhibit excellent photoresponsiveness.

In an aspect, the curable composition can contain the component (1) in an amount of 10 to 40 mass% relative to the total amount of the components (1) to (3).

In an aspect, the curable composition can contain the component (1) in an amount of 10 to 20 mass% relative to the total amount of the components (1) to (3).

According to an aspect, spectacles including the spectacle lens are provided.

The various aspects described in this specification can be combined in two or more in any combination.

The embodiment disclosed herein is an example in every respect and should not be restrictively understood. The scope of the present invention is defined not by the above description but by claims, and intends to include all modifications within meaning and a scope equal to claims.

### Industrial Applicability

The present invention is useful in the field of producing a spectacle lens and spectacles.

## Claims

1. A spectacle lens comprising:
a lens substrate; and a photochromic layer, wherein
the photochromic layer is a cured layer of a curable composition containing a photochromic compound and a plurality of curable compounds,
a surface Martens hardness of the photochromic layer is 5.0 kgf/mm² or more, and
the plurality of curable compounds contain components (1) to (3) below:
(1) neopentyl glycol di(meth)acrylate;
(2) a curable compound having an L-scale Rockwell hardness of homopolymer of 60 or more; and
(3) a curable compound having an L-scale Rockwell hardness of homopolymer of 40 or less.

2. The spectacle lens according to claim 1, wherein the curable composition contains the component (1) in an amount of 10 to 40 mass% relative to a total amount of the components (1) to (3).

3. The spectacle lens according to claim 1 or 2, wherein the curable composition contains the component (1) in an amount of 10 to 20 mass% relative to a total amount of the components (1) to (3).

4. Spectacles comprising the spectacle lens according to any one of claims 1 to 3.
